# EUROPEAN PATENT SPECIFICATION

(11) **EP 1 963 640 B1**
(45) Date of publication and mention of the grant of the patent: **29.04.2015**
(21) Application number: 06835693.0
(22) Date of filing: 12.12.2006
(51) Int. Cl.: F02C 3/16, F02C 7/266

(54) **ROTARY COMBUSTION DEVICE**
ROTATIONSVERBRENNUNGSVORRICHTUNG
DISPOSITIF DE COMBUSTION ROTATIF

(30) Priority: 22.12.2005 NL 1030744
(43) Date of publication of application: 03.09.2008
(73) Proprietor: Micro Turbine Technology B.V., 4811 DT Breda (NL)
(72) Inventor: VAN BERKEL, Arij, Iza??k, NL-3526 XV Utrecht (NL); WITTEVEEN, Gustaaf, Jan, NL-6584 AS Molenhoek (NL); AHOUT, Willibald, Mattheus, Petrus, NL-4811 DT Breda (NL); DE GOEY, Laurentius Philippus Hendrika, 6021 AB Budel (NL); BASTIAANS, Robert Johan Maria, 5451 AV Mill (NL)
(74) Representative: Dekker-Garms, Alwine Emilie
(86) International application number: PCT/NL2006/050313
(87) International publication number: WO 2007/073185

(56) References cited:
- WO-A-00/39440
- WO-A-2004/076835
- DE-C- 889 239
- GB-A- 2 040 359
- US-A1- 3 727 401
- US-B1- 6 907 723

## Description

The present invention relates to a rotary combustion device comprising an annular combustion chamber which is rotatable about an axis of rotation, an inlet which is provided near said axis of rotation and is connected to said annular combustion chamber, and a turbine/outlet/nozzle which is provided near the outer circumference of said combustion chamber.

Such a rotary combustion device is disclosed in WO 2004/076835 A1 in the name of Micro Turbine Technologie B.V. This publication describes a combustion device in the form of a reaction turbine which can be of an extremely compact design and can be used, for example, in combination with heating appliances and/or as an independent generator in mobile applications such as ships, lorries and trains. This reaction turbine is characterized by a combustion chamber rotating at high speeds of rotation. For certain applications, such as the abovementioned use with heating appliances, it is necessary to switch the reaction turbine on and off regularly. In other words, if the reaction turbine is driven by exhaust gases from combustion in its combustion chamber, regular ignition of a combustible mixture in the combustion chamber is necessary.

It must be understood that the rotary combustion device described here can likewise be in the form of a turbine for performing a Rankine cycle, for example an organic Rankine cycle with condensation and evaporation.

In view of the high speed of rotation of the reaction turbine, it has been found that ignition of a gas mixture in a rapidly rotating chamber is not easy.

In addition, there is the problem that once the mixture has been ignited the combustion must be maintained.

It is the object of the present invention to provide a rotary combustion device with flame stabilization, so that it can always be ensured that the mixture which is supplied to the combustion chamber is ignited and optimum combustion constantly occurs. This object is achieved in a combustion device of the type described above in that said combustion chamber extends between the inlet and the outlet in a direction substantially radially relative to said axis of rotation. The flow of the gas here can be directed towards the axis of rotation as well as away from it. In particular, it is preferable for the flow to move towards the axis because the flame can be stabilized better in this way. According to a specific embodiment of the present invention, the rotary combustion device is in the form of a reaction turbine with a turbine wheel provided so that it can rotate about the axis of rotation, which turbine wheel contains an inlet provided near said axis of rotation, a compressor extending from said inlet in the direction of the circumference of the turbine wheel, a rotary combustion chamber connecting to said compressor, and a turbine/outlet/nozzle provided so that it connects to the combustion chamber near the circumference of said turbine wheel.

It will be understood that the abovementioned problems of unstable combustion, in particular at high speeds of rotation of the combustion chamber, are due to various physical circumstances. In this context are mentioned coriolis effects, centrifugal forces and cooling effects.

Separate combustion stabilization means may be provided. Since the construction described above is such that it inherently provides a more stable combustion. The individual combustion stabilization means to be described below are aids for stabilizing the combustion. They can comprise ignition means which are provided outside the combustion chamber.

According to this variant of the invention, the ignition means are provided outside the combustion chamber. This leads to a certain delay occurring in the start of the combustion in the turbine relative to the moment when the ignition is initiated in the combustion chamber.

According to a specific variant of the invention, it is possible to provide the ignition means in the compressor part lying upstream of the combustion chamber. This means that the free radicals which at a later stage lead to the reaction of the gas with oxygen (air) under optimum conditions in the combustion chamber are already generated in the compressor.

The initiation of the ignition at a distance from the combustion chamber is achieved in that a small part of the mixture, such as, for example, approximately 5 volume %, is ignited at a distance, and this mixture is fed to the combustion chamber. The composition of the mixture fed through the separate line can deviate from the composition of the mixture present in the combustion chamber (for example 95 volume %).

According to a further variant, such a line through which combustible mixture is fed a least partially to the combustion chamber is provided so as to be at least partially coaxial with the axis of rotation. In this coaxial part ignition can be achieved in a particularly simple manner. It is possible to produce the ignition mechanism between the inside wall and outside wall of the combustion chamber. Ignition is achieved by generating a spark between said two conducting parts. Hie static electricity required for this can be generated by means of the rotation of the turbine. The ignition means can comprise a spark plug and corresponding electric circuit.

Igniting in a simple manner can also be important in situations in which the combustion is not stable and fails. However, in such situations it is preferable to provide combustion-stabilizing means. Depending on the fuel used and other circumstances, problems can be expected, in particular at high speeds of rotation of a rotary combustion chamber. These problems can be complete failure of the combustion or the occurrence of pulses, flame backfire and the like.

It is proposed to provide a reaction turbine with rotary combustion chamber in which the combustion chamber is provided with combustion-stabilizing means. It has been found that, inter alia, combustion fails primarily in the part of the combustion chamber which is furthest away from the axis of rotation of the combustion chamber. According to a first approach to the present invention, the combustion in the combustion chamber is stabilized by heating the part concerned. This results in the temperature gradient in the combustion chamber being reduced. This heating can be achieved by supplying external heat to, for example, the combustion chamber, for example by making use of the warm exhaust gases. The external supply can also come from a stationary heat source. Another option is to distribute the heat over the combustion chamber or displace heat from the centre of rotation to the outer circumference of the combustion chamber. Heat-conducting elements, such as ribs, scales, spokes and the like, can be present in the combustion chamber, which heat-conducting elements transport heat from the part of the combustion chamber closest to the axis of rotation to the part furthest from the axis of rotation and in addition provide for turbulence, so that the flame can stabilize.

Another possibility is to provide a radiating body in the region of the axis of rotation. This body radiates a second body, which is situated in the region of the fuel inlet of the combustion chamber. In this way a stable ignition source is created.

Other possibilities are to provide a coating either in the combustion chamber or in the compressor situated upstream of the combustion chamber, such as thermal barrier coatings. It is also possible to provide a porous object, such as a porous ceramic material part, metal foam or interwoven metal fibres, in the combustion chamber. It has been found that such a porous material part, on the one hand, distributes heat and, on the other hand, prevents disappearance of ignition-promoting radicals. Another approach is to prevent flame backfire. This can be achieved by providing material at the beginning of the combustion chamber. Examples are a porous, readily permeable material such as foam ceramic, metal foam, or gauze mats of thin metal fibres. Through the use of such materials, a more homogeneous flame can be obtained. Coriolis effects are also avoided. Such a material is preferably positioned at the transition between the compressor channel and the combustion chamber. The combustion chamber can also be filled with this material, in which case the combustion occurs in the material.

It should be understood that these measures for stabilizing the combustion in the combustion chamber and/or preventing flame backfire are separate from the measures described above for optimizing the ignition. Of course, these measures may be combined if desired. For instance, it is possible to achieve the ignition in another way. Examples are to heat the external wall or to heat in another way, so that the self-ignition temperature of the fuel is achieved. Another possibility is a spark ignition in the combustion chamber and finally a flame can be drawn by the compressor. It will be understood that the individual measures described above to stabilize the combustion or to prevent flame backfire can be used in addition to or independently of the invention described in the preamble, the combustion-stabilizing means comprising the positioning of at least a part of the combustion chamber substantially perpendicular to the axis of rotation of the rotary combustion device. It should be understood that express protection is being requested for the different variants individually without combination with a combustion chamber designed in this way.

The invention will be explained in greater detail below with reference to an exemplary embodiment shown in the drawing, in which:

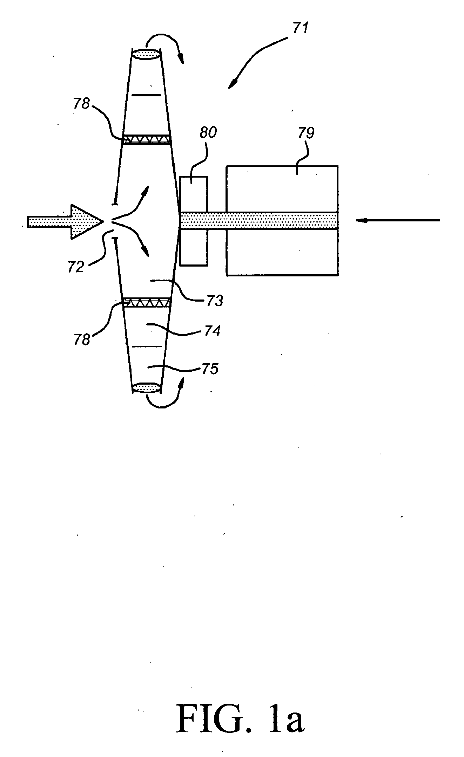

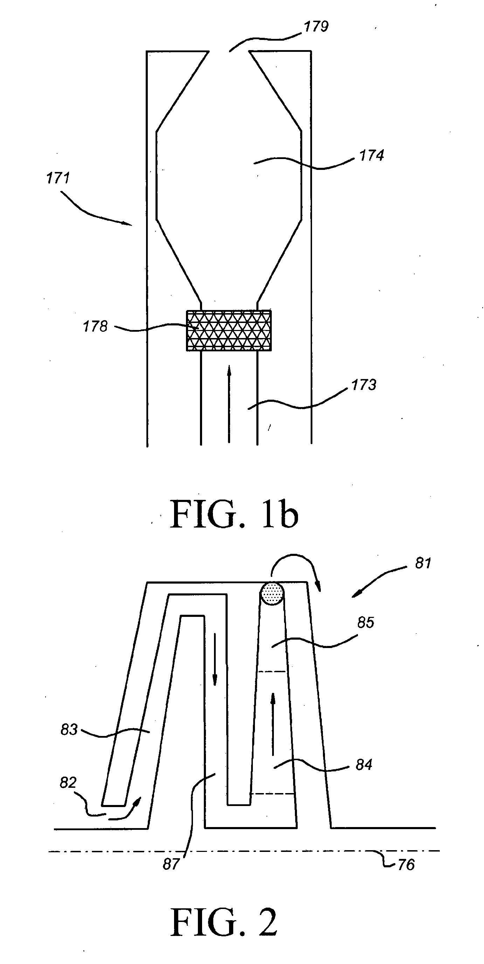

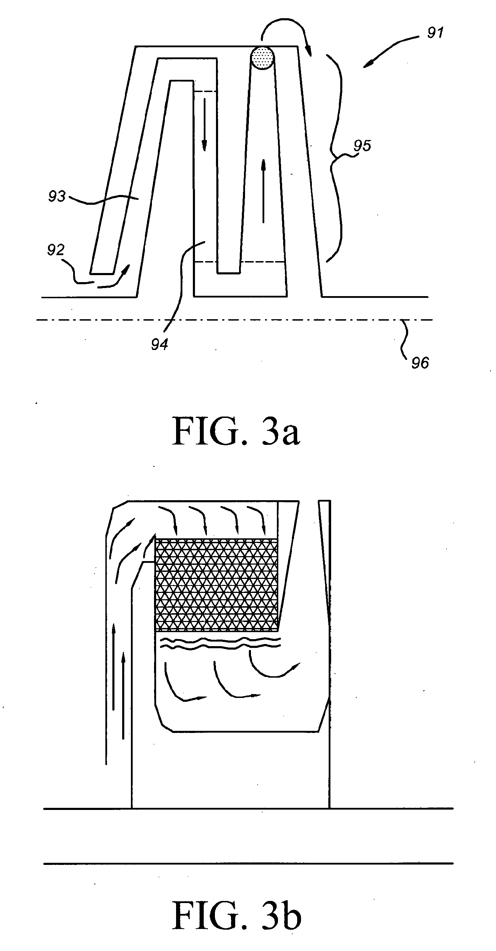

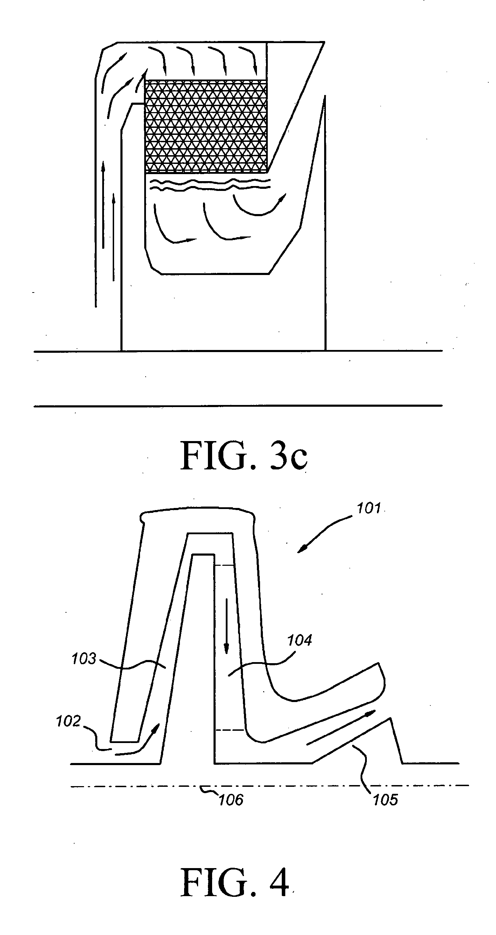

Figs 1a, b show special embodiments of the combustion chamber; Fig. 2 shows a variant of the combustion chamber of Fig. 1; Figs 3a-c show diagrammatic variants of the combustion chamber shown in Fig. 1; Fig. 4 shows a further variant of the combustion chamber.

The various figures show very diagrammatically a reaction turbine. It will be understood that in the case of the embodiment used in practice numerous adaptations and further construction details can be present.

Figs 1 - 4 show ways of stabilizing the combustion in the combustion chamber. Here the combustion chamber and combustion direction are designed to be radial, or partially radial.

For instance, in the embodiment according to Fig. 1a, the reaction turbine is indicated by 71 and has an inlet 72 and a compressor 73 lying at a radial distance from it, with a combustion chamber 74 then lying at a radial distance from said compressor, to which combustion chamber a turbine 75 including nozzle connects radially. Reference numeral 78 shows a flame backfire block 78, preferably made of ceramic material, and more particularly ceramic or metal foam material. Reference numeral 80 indicates a bearing, and 79 indicates a generator. It will be understood mat the reaction turbines described above can be connected to any further construction, such as generators. Fig. 1b shows only a part of a variant of Fig. 1a This reaction turbine is indicated by 171 and is in the form of a disc turbine. Reference numeral 173 indicates the compressor channel, and 174 indicates the combustion chamber. The flame backfire block is indicated by 178, and the nozzle or outlet by 179.

Fig. 2 shows a reaction turbine 81 with inlet 82. A compressor is indicated by 83. A return flow channel 87 is connected to the compressor, followed by a combustion chamber 84 extending radially away from the axis 76. The outlet part, consisting of turbine and nozzles 85, is situated radially on the end of the combustion chamber.

Fig. 3a shows a construction which is based on the principle according to Figs 1 and 2, and the turbine wheel is indicated by 91 here. The latter is provided with an inlet 92, a radial compressor 93, and a combustion chamber 94. Unlike the earlier example, the direction of flow of the gas, as can be seen from the direction of the arrow, is towards the axis 96. An outlet 95 with turbine and nozzles is connected to the combustion chamber 94. Figures 3b and 3c are specific embodiments, in which the combustion occurs as far as possible on the outside of the rotary device, where the pressure is highest. In Figure 3b there is radial outflow of the hot gases at the nozzles, while in Figure 3c there is tangential outflow of the hot gases at the nozzles.

Fig. 4 shows a variant in which the turbine wheel is indicated by 101 and is provided with an inlet 102, a compressor 103 and a combustion chamber 104. As in the case of the embodiment according to Fig. 3, the direction of movement of the gas is towards the axis 106. The outlet part is shown by 105.

It is clear from the above that the various inventive ideas mentioned here can be embodied in a large number of ways. After reading about the above embodiments, further variants, which lie within the scope of the claims, will immediately spring to mind in the case of the person skilled in the art.

## Claims

1. Rotary combustion device comprising an annular combustion chamber (74; 84; 94; 104) which is rotatable about an axis of rotation, an inlet which is provided near said axis of rotation and is connected to said annular combustion chamber, and a turbine/outlet/nozzle which is provided near the outer circumference of said combustion chamber, **characterized in that** said combustion chamber (74; 84; 94; 104) extends between the inlet and the outlet in a direction substantially radially relative to said axis of rotation (76; 96; 106).

2. Rotary combustion device according to claim 1, **characterized in that** the device comprises a reaction turbine with a turbine wheel (91; 101) provided so that it can rotate about said axis of rotation, which turbine wheel contains an inlet (92; 102) provided near said axis of rotation, a compressor (93; 103) extending from said inlet in the direction of the circumference of the turbine wheel, a rotary combustion chamber (94; 104) connecting to said compressor, and a turbine/outlet/nozzle provided so that it connects to the combustion chamber near the circumference of said turbine wheel.

3. Rotary combustion device according to one of the preceding claims, **characterized in that** ignition means (8) are present for igniting the gas present in the combustion chamber, said ignition means (8) are provided outside said combustion chamber (4).

4. Rotary combustion device according to Claim 3, **characterized in that** said ignition means comprise a supply line (7) connected to the combustion chamber and also an igniter (8) provided in said line (7).

5. Rotary combustion device according to 4, **characterized in that** said line extends coaxially with said axis of rotation (6).

6. Rotary combustion device according to one of Claims 3 - 5, **characterized in that** the ignition means are formed by the shroud and impeller of the turbine, between which a spark is generated by means of static electricity, said static electricity being generated by means of the rotation of the reaction turbine.

7. Method for combusting an air/fuel mixture in a rotary combustion device according to one of the preceding claims, in which during said combustion said air/fuel mixture is rotated as a ring of gas about an axis, said air is moved from said axis by centrifugal force to said ring, and the combusted air/fuel mixture is discharged relative to said axis at a position on or outside said ring and provides propulsion, wherein the partially combusted air/fuel mixture is moved substantially radially relative to said axis, **characterized in that** in the combustion chamber said partially combusted air/fuel mixture is moved substantially radially towards said axis.

## Patentansprüche

1. Rotationsverbrennungsvorrichtung umfassend eine ringförmige Brennkammer (74; 84; 94; 104), die um eine Rotationsachse rotieren kann, einen Einlass, der in der Nähe der genannten Rotationsachse vorgesehen und mit der genannten ringförmigen Brennkammer verbunden ist, und eine(n) Turbine/Auslass/Düse, die/der sich in der Nähe des Außenumfangs der genannten Brennkammer befindet, **dadurch gekennzeichnet, dass** die genannte Brennkammer (74; 84; 94; 104) zwischen dem Einlass und dem Auslass in einer Richtung im Wesentlichen radial zu der genannten Rotationsachse (76; 96; 106) verläuft.

2. Rotationsverbrennungsvorrichtung nach Anspruch 1, **dadurch gekennzeichnet, dass** die Vorrichtung eine Reaktionsturbine mit einem Turbinenrad (91; 101) umfasst, so ausgelegt, dass es um die genannte Rotationsachse rotieren kann, wobei das Turbinenrad einen in der Nähe der genannten Rotationsachse vorgesehenen Einlass (92; 102), einen von dem genannten Einlass in Richtung des Umfangs des Turbinenrads verlaufenden Kompressor (93; 103), eine mit dem genannten Kompressor verbundene Rotationsbrennkammer (94; 104) und eine(n) Turbine/Auslass/Düse aufweist, die/der so ausgelegt ist, dass sie/er mit der Brennkammer in der Nähe des Umfangs des genannten Turbinenrads verbunden wird.

3. Rotationsverbrennungsvorrichtung nach einem der vorherigen Ansprüche, **dadurch gekennzeichnet, dass** Zündmittel (8) zum Zünden des in der Brennkammer vorhandenen Gases vorhanden sind, wobei die genannten Zündmittel (8) außerhalb der genannten Brennkammer (4) vorgesehen sind.

4. Rotationsverbrennungsvorrichtung nach Anspruch 3, **dadurch gekennzeichnet, dass** das genannte Zündmittel eine mit der Brennkammer verbundene Versorgungsleitung (7) und auch einen in der genannten Leitung (7) vorgesehenen Zünder (8) umfasst.

5. Rotationsverbrennungsvorrichtung nach Anspruch 4, **dadurch gekennzeichnet, dass** die genannte Leitung koaxial zur Rotationsachse (6) verläuft.

6. Rotationsverbrennungsvorrichtung nach einem der Ansprüche 3 - 5, **dadurch gekennzeichnet, dass** die Zündmittel durch den Mantel und das Laufrad der Turbine ausgebildet sind, zwischen denen ein Funke durch statische Elektrizität erzeugt wird, wobei die genannte statische Elektrizität durch die Rotation der Reaktionsturbine erzeugt wird.

7. Verfahren zum Verbrennen eines Luft/Kraftstoff-Gemischs in einer Rotationsverbrennungsvorrichtung nach einem der vorherigen Ansprüche, wobei während der genannten Verbrennung das genannte Luft/Kraftstoff-Gemisch als ein Ring von Gas um eine Achse gedreht wird, wobei die genannte Luft von der genannten Achse durch Zentrifugalkraft zu dem genannten Ring bewegt wird und das verbrannte Luft/KraftstoffGemisch relativ zu der genannten Achse in einer Position auf oder außerhalb des genannten Rings ausgestoßen wird und Vortrieb erzeugt, wobei das teilweise verbrannte Luft/KraftstoffGemisch im Wesentlichen radial relativ zu der genannten Achse bewegt wird, **dadurch gekennzeichnet, dass** in der Brennkammer das genannte teilweise verbrannte Luft/KraftstoffGemisch im Wesentlichen radial in Richtung auf die genannte Achse bewegt wird.

## Revendications

1. Dispositif de combustion rotatif comprenant une chambre de combustion annulaire (74 ; 84 ; 94 ; 104) qui peut tourner autour d'un axe de rotation, une entrée qui est placée près dudit axe de rotation et qui est connectée à ladite chambre de combustion annulaire, et une turbine/sortie/tuyère qui est placée près de la circonférence extérieure de ladite chambre de combustion, **caractérisé en ce que** ladite chambre de combustion (74 ; 84 ; 94 ; 104) s'étend entre l'entrée et la sortie dans une direction substantiellement radiale par rapport audit axe de rotation (76 ; 96 ; 106).

2. Dispositif de combustion rotatif selon la revendication 1, **caractérisé en ce que** le dispositif comprend une turbine à réaction comportant une roue de turbine (91 ; 101) disposée de façon à pouvoir tourner autour dudit axe de rotation, laquelle roue de turbine contient une entrée (92 ; 102) placée près dudit axe de rotation, un compresseur (93 ; 103) qui s'étend depuis ladite entrée dans la direction de la circonférence de la roue de turbine, une chambre de combustion rotative (94 ; 104) connectée audit compresseur, et une turbine/sortie/tuyère placée de façon à se connecter à la chambre de combustion près de la circonférence de ladite roue de turbine.

3. Dispositif de combustion rotatif selon l'une des revendications précédentes, **caractérisé en ce que** des moyens d'allumage (8) sont présents pour allumer le gaz présent dans la chambre de combustion, lesdits moyens d'allumage (8) étant placés à l'extérieur de ladite chambre de combustion (4).

4. Dispositif de combustion rotatif selon la revendication 3, **caractérisé en ce que** lesdits moyens d'allumage comprennent une conduite d'alimentation (7) connectée à la chambre de combustion et aussi un allumeur (8) placé dans ladite conduite (7).

5. Dispositif de combustion rotatif selon la revendication 4, **caractérisé en ce que** ladite conduite s'étend de façon coaxiale avec ledit axe de rotation (6).

6. Dispositif de combustion rotatif selon l'une des revendications 3 à 5, **caractérisé en ce que** les moyens d'allumage sont formés par l'enveloppe et l'aubage de la turbine, entre lesquels une étincelle est générée par de l'électricité statique, ladite électricité statique étant produite au moyen de la rotation de la turbine à réaction.

7. Procédé pour la combustion d'un mélange air-combustible dans un dispositif de combustion rotatif selon l'une des revendications précédentes, dans lequel pendant ladite combustion, ledit mélange air-combustible est mis en rotation sous la forme d'un anneau de gaz autour d'un axe, ledit air est éloigné dudit axe par la force centrifuge exercée sur ledit anneau, et le mélange air-combustible brûlé est refoulé par rapport audit axe en une position située sur ou à l'extérieur dudit anneau et fournit une propulsion, dans lequel le mélange air-combustible partiellement brûlé est déplacé substantiellement radialement par rapport audit axe, **caractérisé en ce que** dans la chambre de combustion, ledit mélange air-combustible partiellement brûlé est déplacé substantiellement radialement vers ledit axe.
